(19) **Europäisches Patentamt**

**European Patent Office**

**Office européen des brevets**

(11) **EP 1 628 258 A1**

(12) **EUROPEAN PATENT APPLICATION**

(43) Date of publication:
**22.02.2006 Bulletin 2006/08**

(51) Int Cl.:
*G06T 5/00* (2006.01)          *H04N 5/14* (2006.01)
*H04N 9/64* (2006.01)

(21) Application number: **05291693.9**

(22) Date of filing: **08.08.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **10.08.2004 KR 2004062876**

(71) Applicant: **LG Electronics, Inc.**
**Seoul 150-875 (KR)**

(72) Inventor: **Park, Su-Jin**
**Gwanak-gu, 151-056 Seoul (KR)**

(74) Representative: **Burbaud, Eric**
**Cabinet Plasseraud**
**65/67 rue de la Victoire**
**75440 Paris Cedex 09 (FR)**

(54) **Apparatus and method for improving color transition using nonlinear laplacian**

(57)     An apparatus and a method for improving color transition using a nonlinear Laplacian is disclosed, wherein color transition is controlled through nonlinear Laplacian operation, thereby simplifying algorithm and reducing the influence of noise, and wherein a nonlinear Laplacian operation unit detects a minimum and a maximum in chrominance signals located within a region of a mask having a predetermined size centered at an input chrominance signal and calculates a correction signal, a transition increase direction-detecting unit determines a transition increase direction signal based on the calculated correction signal, a transition magnitude-generating unit generates a transition magnitude signal based on the correction signal, and a transition control unit controls the transition of the input chrominance signal based on the minimum and the maximum, the correction signal, the transition increase direction signal and the transition magnitude signal and generates an output chrominance signal.

EP 1 628 258 A1

**Description**

BACKGROUND OF THE INVENTION

1. Field of the Invention

The present invention relates to an apparatus and a method for improving color transition using a nonlinear Laplacian, wherein a color-smearing phenomenon caused by delay of a color signal is improved using nonlinear Laplacian operation.

2. Description of the Related Art

Generally, a human eyesight is more sensitive to changes in luminance than those in color. Therefore, when luminance signals and chrominance signals are transmitted in NTSC (National Television System Committee), PAL (Phase Alternation Line) and SECAM (Systems Equential Couleur A Memoire) standards, the chrominance signals are transmitted with a narrower bandwidth than that of the luminance signals.

However, as the bandwidth of chrominance signals becomes narrower, the color transition displayed on a screen becomes slow, thereby causing deterioration of color signals.

In order to reduce such a phenomenon, an apparatus for improving color transition has been used.

A conventional apparatus for improving color transition is disclosed in U.S. Patent Application Publication No. US2003/0107678A1. As shown in FIG. 1, the apparatus disclosed in U.S. Patent Application Publication No. US2003/0107678A1 comprises a Gaussian filter (100) for passing only a low-frequency band of an input chrominance signal (F); a second derivative calculator (110) for obtaining a second derivative of an output signal of the Gaussian filter (100); a sign detector (120) for detecting a sign (Sign(F")) of a second derivative signal (F") outputted from the second derivative calculator (110); a "distance to local maximum"-measuring unit (130) and a "distance to local minimum"-measuring unit (140) for calculating distances to a local maximum and a local minimum of the input chrominance signal (F); a logic controller (150) for operating a correction signal (R) using the distances to the local maximum and local minimum outputted from each of the "distance to local maximum"-measuring unit (130) and the "distance to local minimum"-measuring unit (140) and the sign (Sign(F")) of the second derivative signal (F"); a gain control function unit (160) for determining a gain (g) of the second derivative signal (F"); a multiplier (170) for multiplying a control value (R) of the logic controller (150) by the gain (g) of the gain control function unit (160); and an adder (180) for generating a chrominance signal (G) having an enhanced sharpness by adding an output signal (AR) of the multiplier (170) to the input chrominance signal (F).

In the conventional apparatus for improving color transition constructed as such, the input chrominance signal (F) is low-pass filtered in the Gaussian filter (100) and then subjected to second differentiation in the second derivative calculator (110) to output the second derivative signal (F"). Thereafter, the sign (Sign(F")) of the outputted second derivative signal (F") is detected in the sign detector (120) and then inputted into the logic controller (150).

Further, the distances to the local maximum and local minimum of the input chrominance signal (F) are detected in the "distance to local maximum"-measuring unit (130) and the "distance to local minimum"-measuring unit (140) and then inputted into the logic controller (150).

Then, the logic controller (150) calculates the correction signal (R) using the distances to the local maximum and local minimum and the sign (Sign(F")), and the calculated correction signal (R) is inputted into the multiplier (170).

Meanwhile, the gain control function unit (160) outputs the gain (g) to the multiplier (170) depending on the second derivative signal (F") outputted from the second derivative calculator (110), and the multiplier (170) multiplies the correction signal (R) outputted from the logic controller (150) by the gain (g). Thereafter, the adder (180) adds the signal (AR) outputted from the multiplier (170) to the input chrominance signal (F), thereby outputting the chrominance signal (G) having an enhanced sharpness.

However, in the conventional apparatus thus described for improving color transition using second differential operation, there is a disadvantage in that signals should be filtered by the Gaussian filter to extract a magnitude component of color transition that is strong against noise, and a great deal of operation is required to obtain a second derivative.

Further, since a function operated by the gain control function unit has only the form of a monotone decreasing function, there is a disadvantage in that it is impossible to control the function.

SUMMARY OF THE INVENTION

It is an object of the present invention to provide an apparatus and method for improving color transition using a nonlinear Laplacian, wherein upon processing of U and V signals in a YUV space, color transition is controlled through nonlinear Laplacian operation, thereby simplifying algorithm and reducing the influence of noise.

In an apparatus and a method for improving color transition using a nonlinear Laplacian according to the present invention for achieving the object, nonlinear Laplacian operation is executed without using additional second differentiation or Gaussian filtering so as to extract a correction signal, which is a transition of a chrominance signal less influenced by noise and granularity, while reducing the complexity of algorithm on hardware and software.

A transition increase direction signal is generated depending on the value of the extracted correction signal to determine an increase direction of the input chrominance signal, and a transition magnitude signal is generated using an equation predetermined according to the value of a correction signal.

Further, the transition of the input chrominance signal is controlled by the transition increase direction signal and the transition magnitude signal, thereby reducing a color smearing phenomenon.

Therefore, according to an aspect of the present invention for achieving the object, there is provided an apparatus for improving color transition, wherein a nonlinear Laplacian operation unit detects a minimum and a maximum in chrominance signals located within a region of a mask having a predetermined size centered at an input chrominance signal and calculates a correction signal, a transition increase direction-detecting unit determines a transition increase direction signal based on the calculated correction signal, a transition magnitude-generating unit generates a transition magnitude signal based on the correction signal, and a transition control unit controls the transition of the input chrominance signal based on the minimum and the maximum, the correction signal, the transition increase direction signal and the transition magnitude signal and generates an output chrominance signal.

According to another aspect of the present invention, there is provided a method for improving color transition, comprising the steps of: detecting a minimum and a maximum in chrominance signals located within a region of a mask having a predetermined size centered at an input chrominance signal; generating a correction signal by causing the detected minimum and maximum to be subjected to nonlinear Laplacian operation; generating a transition increase direction signal and a transition magnitude signal depending on the magnitude of the correction signal; and controlling the transition of the input chrominance signal based on the minimum and the maximum, the correction signal, the transition increase direction signal and the transition magnitude signal, and generating an output chrominance signal.

BRIEF DESCRIPTION OF THE DRAWINGS

The above and other objects, features and advantages of the present invention will become apparent from the following description of preferred embodiments given in conjunction with the accompanying drawings, in which:

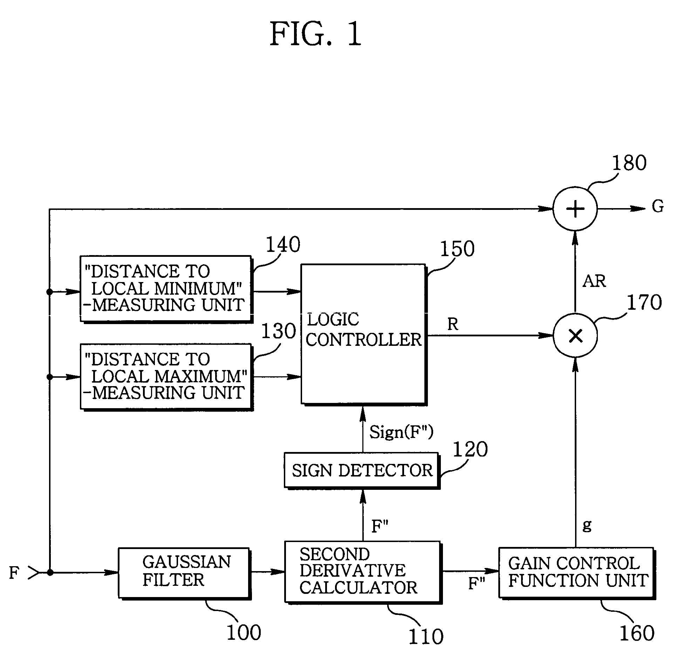

FIG. 1 is a block diagram showing the configuration of a conventional apparatus for improving color transition;
FIG. 2 is a block diagram showing the configuration of an apparatus for improving color transition according to the present invention;
FIG. 3 is a block diagram specifically showing the configuration of a correction signal calculation unit in the apparatus for improving color transition according to the present invention;
FIG. 4 is a flowchart illustrating an operation of a transition increase direction-detecting unit in an apparatus for improving color transition according to the present invention;
FIG. 5 is a diagram illustrating an operation of the transition increase direction-detecting unit in an apparatus for improving color transition according to the present invention;
FIG. 6 is a flowchart illustrating an operation process of a transition control unit in an apparatus for improving color transition according to the present invention;
FIG. 7 is a view illustrating the property of an output chrominance signal in an apparatus for improving color transition according to the present invention;
FIG. 8 is a flowchart illustrating a method for improving color transition according to the present invention; and
FIGS. 9 (a) and (b) are views showing a state where input chrominance signals are displayed on a screen, and a state where the input chrominance signals are processed and displayed on a screen according to the present invention.

DETAILED DESCRIPTION OF THE INVENTION

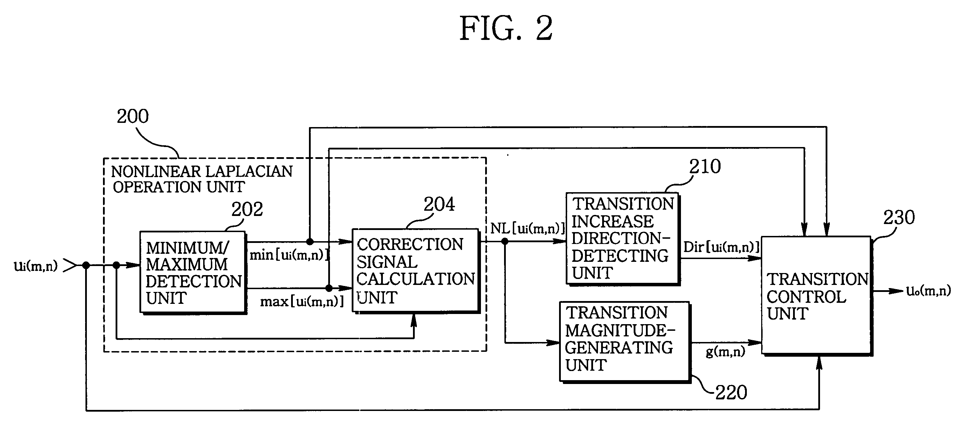

Hereinafter, preferred embodiments of the present invention will be described in detail with reference to FIGS. 2 to 9.

FIG. 2 is a block diagram showing the configuration of an apparatus for improving color transition according to the present invention. Here, reference numeral 200 denotes a nonlinear Laplacian operation unit for performing nonlinear Laplacian operation for an input chrominance signal ($Ui(m, n)$) and generating a correction signal ($NL[Ui(m, n)]$). The nonlinear Laplacian operation unit (200) includes a minimum/maximum detection unit (202) for detecting a minimum ($min[Ui(m, n)]$) and a maximum ($max[Ui(m, n)]$) in chrominance signals located within a region of an $N \times N$ mask centered at the input signal ($Ui(m, n)$), and a correction signal calculation unit (204) for calculating the correction signal ($NL[Ui(m, n)]$) by performing four fundamental rules of arithmetics for the minimum ($min[Ui(m, n)]$) and the maximum ($max[Ui(m, n)]$.

n)]) detected by the minimum/maximum detection unit (202) and the input chrominance signal (Ui(m, n)).

Reference numeral 210 denotes a transition increase direction-detecting unit for determining a transition increase direction based on the correction signal (NL[Ui(m, n)]) generated by the nonlinear Laplacian operation unit (200) and generating a transition increase direction signal (Dir[Ui(m, n)]). Reference numeral 220 denotes a transition magnitude-generating unit for generating a transition magnitude signal (g(m, n)) based on the correction signal (NL[Ui(m, n)]) generated by the nonlinear Laplacian operation unit (200).

Reference numeral 230 denotes a transition control unit. The transition control unit (230) controls the transition of the input chrominance signal (Ui(m, n)) depending on the minimum (min[Ui(m, n)]) and the maximum (max[Ui(m, n)]), the transition increase direction signal (Dir[Ui(m, n)]), and the transition magnitude signal (g(m, n)).

Here, the input chrominance signal (Ui(m, n)) is a U signal in a YUV space, which refers to difference between a luminance signal and a blue component. A V signal, which is difference between a luminance signal and a red component is also processed in the same manner as that of the U signal to improve color transition.

If the chrominance signal (Ui(m, n)) is inputted into the nonlinear Laplacian operation unit (200), the minimum/maximum detection unit (202) detects all the chrominance signals located within a region of an N × N mask centered at the chrominance signal (Ui(m, n)), and then detects the minimum (min[Ui(m, n)]) and the maximum (max[Ui(m, n)]) in the detected chrominance signals. The correction signal calculation unit (204) calculates the correction signal (NL[Ui(m, n)]), which is the nonlinear Laplacian for the chrominance signal (Ui(m, n)), by performing four fundamental rules of arithmetics for the detected minimum (min[Ui(m, n)]) and maximum (max[Ui(m, n)]).

The transition increase direction-detecting unit (210) determines a transition increase direction based on the correction signal (NL[Ui(m, n)]) outputted from the nonlinear Laplacian operation unit (200), and then outputs the transition increase direction signal (Dir[Ui(m, n)]). Further, the transition magnitude-generating unit (220) calculates the magnitude of the correction signal ( | NL[Ui(m, n)]|) and then automatically or manually outputs the transition magnitude signal (g(m, n)).

The transition control unit (230) controls the transition of the input chrominance signal (Ui(m, n)) to a chrominance signal (Uo(m, n)) with an improved color transition, using the transition increase direction signal (Dir[Ui(m, n)]), the transition magnitude signal (g(m, n)), and the minimum (min[Ui(m, n)]) and maximum (max[Ui(m, n)]) of the input chrominance signal (Ui(m, n)).

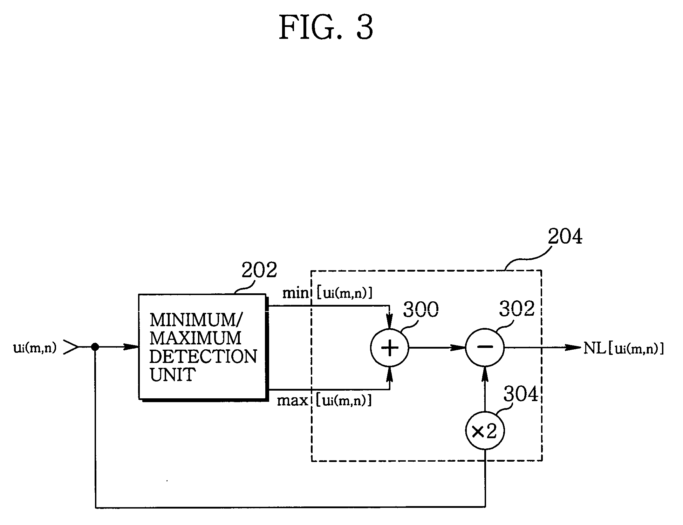

In nonlinear Laplacian operation of the nonlinear Laplacian operation unit (200) as shown in FIG. 3, the minimum/maximum detection unit (202) first determines chrominance signals located within a region of an N×N mask centered at the input chrominance signal (Ui(m, n)), e.g., nine chrominance signals located within a region of a 3×3 mask, and then detects a minimum (min[Ui(m, n)]) and a maximum (max[Ui(m, n)]). In the correction signal calculation unit (204), a multiplier (304) multiplies the input chrominance signal (Ui(m, n)) by two, and an adder (300) adds the minimum (min[Ui(m, n)]) and the maximum (max[Ui(m, n)]) detected by the minimum/maximum detection unit (202) to each other. Further, a subtracter (302) subtracts the output signal of the multiplier (304) from the output signal of the adder (300) to obtain a correction signal (NL[Ui(m, n)]) for the input chrominance signal (Ui(m, n)).

The aforementioned operation of the correction signal calculation unit (204) is similar to mophological Laplacian operation and can be expressed as the following Equation 1:

$$NL[Ui(m,n)] = \max[Ui(m,n)] + \min[Ui(m,n)] - 2 \times Ui(m,n) \qquad \cdots\cdots (1)$$

That is, in the prior art, low pass filtering (e.g., Gaussian filtering) should be inevitably performed as a pre-processing for improving color transition to reduce the influence of noise and granularity. However, the nonlinear Laplacian operation of the present invention can extract the transition of chrominance signals less influenced by the noise and granularity, while reducing the complexity of algorithm on hardware and software.

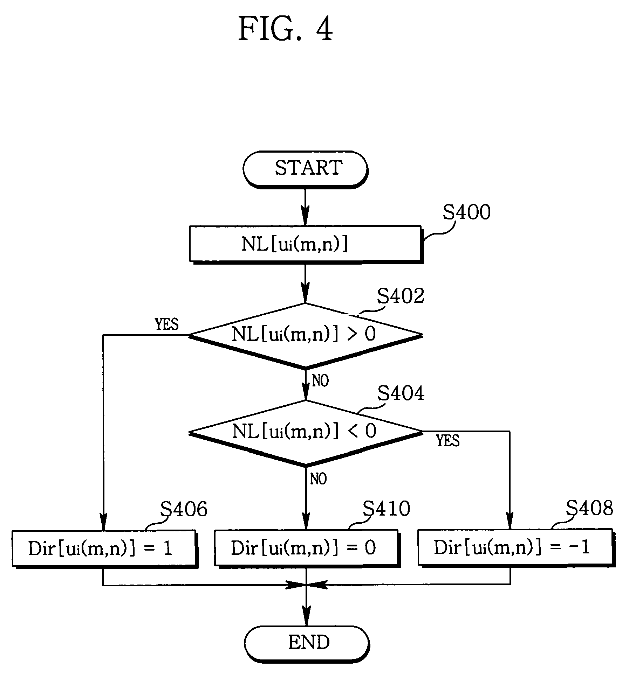

FIG. 4 is a flowchart illustrating the detection operation of the transition increase direction-detecting unit (210) in the present invention. As shown in the figure, the transition increase direction-detecting unit (210) receives a correction signal (NL[Ui(m, n)]) outputted from the nonlinear Laplacian operation unit (200) (step S400), and then determines whether the value of the input correction signal (NL[Ui(m, n)]) is larger than or less than 0 (steps S402 and S404).

If it is determined in step S402 that the value of the correction signal (NL[Ui(m, n)]) is larger than 0, the transition increase direction-detecting unit (210) sets the value of a transition increase direction signal (Dir[Ui(m, n)]) at 1 (step S406). If it is determined in step S404 that the value of the correction signal (NL[Ui(m, n)]) is less than 0, the transition increase direction-detecting unit (210) sets the value of the transition increase direction signal (Dir[Ui(m, n)]) at -1 (step S408). Further, if it is determined that the value of the correction signal (NL[Ui(m, n)]) is not larger than 0 and not less than 0, i.e., NL[Ui(m, n)] = 0, the transition increase direction-detecting unit (210) sets the value of the transition increase direction signal (Dir[Ui(m, n)]) at 0 (step S410).

The transition increase direction-detecting unit (210) is to detect a transition increase direction using the sign of the correction signal (NL[Ui(m, n)]) outputted from the nonlinear Laplacian operation unit (200).

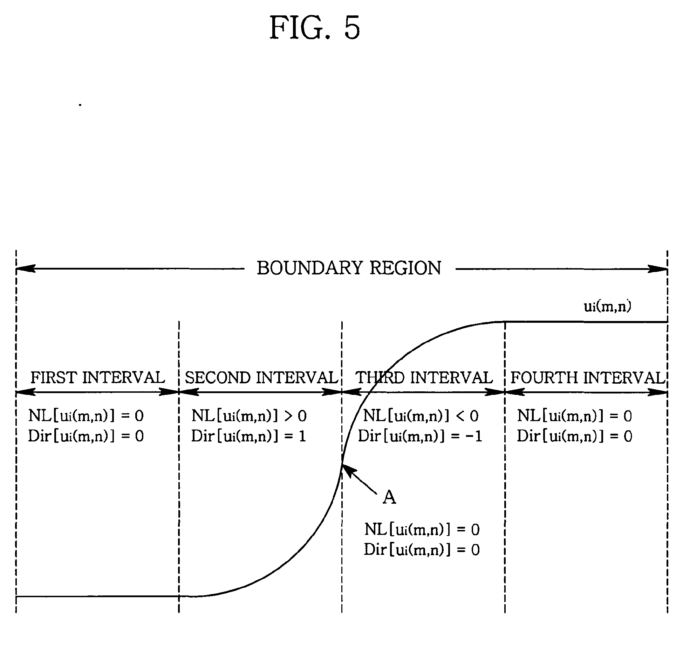

FIG. 5 is a waveform diagram illustrating the detection operation of the transition increase direction-detecting unit in the apparatus for improving color transition according to the present invention. An boundary region of an image is divided into first and fourth intervals in which there is no variation in the gradient of an input chrominance signal (Ui (m, n)), a second interval in which the gradient of the input chrominance signal (Ui(m, n)) is in a rising state, and a third interval in which the gradient of the input chrominance signal (Ui(m, n)) is in a falling state.

Since there is no variation in the gradient of the input chrominance signal (Ui(m, n)) in the first and fourth intervals, a correction signal (NL[Ui(m, n)]) is 0 so that a transition increase direction signal (Dir[Ui(m, n)]) is also 0. Since the gradient of the input chrominance signal (Ui(m, n)) increases in the second interval, the correction signal (NL[Ui(m, n)]) is larger than 0 and thus the transition increase direction signal (Dir[Ui(m, n)]) is 1. Since the gradient of the input chrominance signal (Ui(m, n)) is changed from an increasing state to a decreasing state at point A that is a boundary point between the second and third intervals, the correction signal (NL[Ui(m, n)]) is 0 and thus the transition increase direction signal (Dir[Ui(m, n)]) is also 0. Since the gradient of the input chrominance signal (Ui(m, n)) decreases in the third interval, the correction signal (NL[Ui(m, n)]) is less than 0 and thus the transition increase direction signal (Dir[Ui (m, n)]) is -1.

Therefore, the transition increase direction-detecting unit (210) outputs the transition increase direction signal (Dir[Ui(m, n)]) as 1 if the correction signal (NL[Ui(m, n)]) has a positive value, as -1 if the correction signal (NL[Ui(m, n)]) has a negative value, and as 0 if the correction signal (NL[Ui(m, n)]) is 0.

The transition magnitude-generating unit (220) determines a transition magnitude by causing the correction signal (NL[Ui(m, n)]) to be subjected to operation using the following Equation 2 that is a second rational expression:

$$g(m,n) = \frac{a \times NL[Ui(m,n)]^2 + b \times |NL[Ui(m,n)]| + c}{a \times NL[Ui(m,n)]^2 + d \times |NL[Ui(m,n)]| + e} \times k \qquad \cdots\cdots (2)$$

Where parameters a, b, c, d, e and k are experimental constants, and a = 0 or 1, b<d, c<e, and 0<k<1 or k = 1.

The apparatus for improving the color transition according to the present invention has an automatic mode and a manual mode. If the apparatus is set at the manual mode, the transition magnitude signal (g(m, n)) can be set by a user's direct control of the transition magnitude-generating unit (220). In other words, although a, b, c, d and e are parameters set identically in both the automatic and manual modes, k is fixed as 1 in the automatic mode, and set to be in a range of 0 to 1 in the manual mode so that a transition magnitude can be controlled by a user. Here, the parameter k has the function of controlling chrominance signals for an entire image.

Accordingly, since the transition magnitude signal (g(m, n)) always has a value not greater than 1 according to parameter conditions of a, b, c, d, e and k, the degree of transition control is not high and thus a phenomenon of distortion such as overshoot or undershoot can be prevented. Since the transition magnitude signal (g(m, n)) has a value obtained by using the correction signal (NL[Ui(m, n)]), it has a property by which it is strong against noise and granularity and a chrominance signal within a local region can be controlled.

Therefore, the increase direction of the input chrominance signal is determined by the transition increase direction signal, and information on whether how much the input chrominance signal is increased or decreased depending on a transition magnitude signal is transmitted to the transition control unit (230) that is a final end.

The input chrominance signal (Ui(m, n)), the transition increase direction signal (Dir[Ui(m, n)]), the transition magnitude signal (g(m, n)), and the minimum (min[Ui(m, n)]) and the maximum (max[Ui(m, n)]) of the input chrominance signal (Ui(m, n)) are inputted into the transition control unit (230).

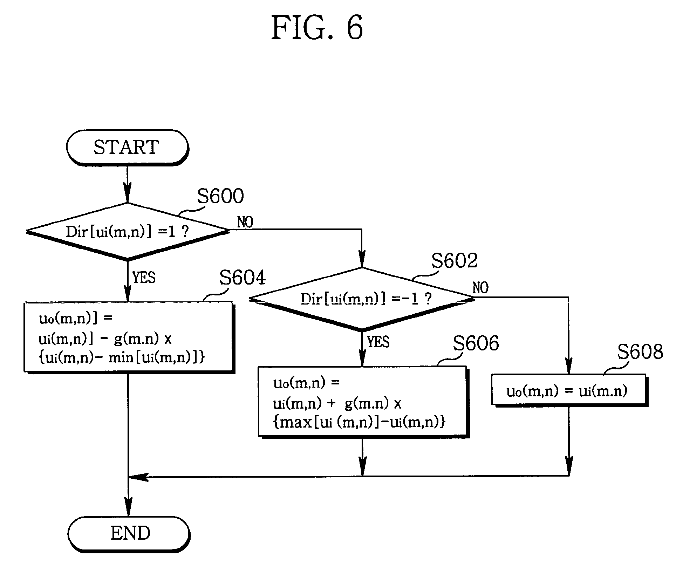

FIG. 6 is a flowchart illustrating an operation process of the transition control unit in the present invention. As shown in this figure, the transition control unit (230) determines whether the value of the transition increase direction signal (Dir[Ui(m, n)]) is 1 or -1 (steps S600 and S602). If it is determined that the value of the transition increase direction signal (Dir[Ui(m, n)]) is 1, the transition control unit (230) determines the value of the output chrominance signal (Uo(m, n)) as Ui(m, n) - g(m, n) × {Ui(m,n)-min[Ui(m, n)]} (step S604). If it is determined that the value of the transition increase direction signal (Dir[Ui(m, n)]) is -1, the transition control unit (230) determines the value of the output chrominance signal (Uo(m, n)) as Ui(m, n) +g(m, n) × {max[Ui(m, n)] - Ui(m, n)} (step S606). If the value of the transition increase direction signal (Dir[Ui(m, n)]) is 0 rather than 1 or -1, the transition control unit (230) determines the value of the output chrominance signal (Uo(m, n)) as the value of the input chrominance signal (Ui(m, n)) (step 608).

The operation process of the transition control unit (230) functions to multiply the input chrominance signal (Ui (m, n)) by a transition magnitude to increase or decrease the input chrominance signal (Ui(m, n)) according to a transition increase direction, further increasing the degree of change in transition.

In addition, if the transition increase direction signal (Dir[Ui(m, n)]) is 0, it means a state where there is no transition of the input chrominance signal or a transition increase and a transition decrease thereof intersect each other.

Thus, the original input chrominance signal (Ui(m, n)) is preserved as it is and then outputted. The preservation of such a signal prevents distortion of a chrominance signal in a region where a chrominance signal is flat or at a middle point of the transition increase.

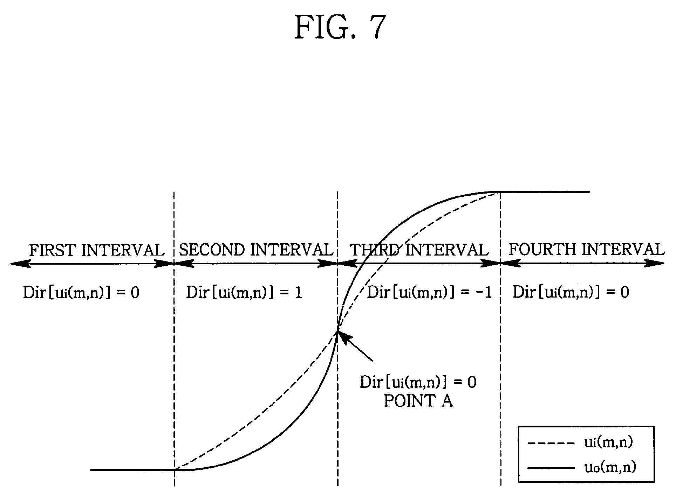

In the apparatus for improving the color transition according to the present invention, the output chrominance signal (Uo(m, n)) outputted from the transition control unit 230, which is the final end, is shown in FIG. 7. In other words, since the value of the transition increase direction signal (Dir[Ui(m, n)]) is 0 in first and fourth intervals where there is no transition and at point A that is a boundary point between second and third intervals, the original input chrominance signal (Ui(m, n)) is directly outputted as the output chrominance signal (Uo(m, n)).

However, the transition control unit (230) outputs the output chrominance signal (Uo(m, n)), which is decreased by a predetermined magnitude as compared with the input chrominance signal (Ui(m, n)), in the second interval where transition increases because the value of the transition increase direction signal (Dir[Ui(m, n)]) is 1. Further, the transition control unit (230) outputs the output chrominance signal (Uo(m, n)), which increases by a predetermined magnitude as compared with the input chrominance signal Ui(m, n), in the third interval where transition decreases because the value of the transition increase direction signal (Dir[Ui(m, n)]) is -1, thereby preventing the phenomenon of color smearing.

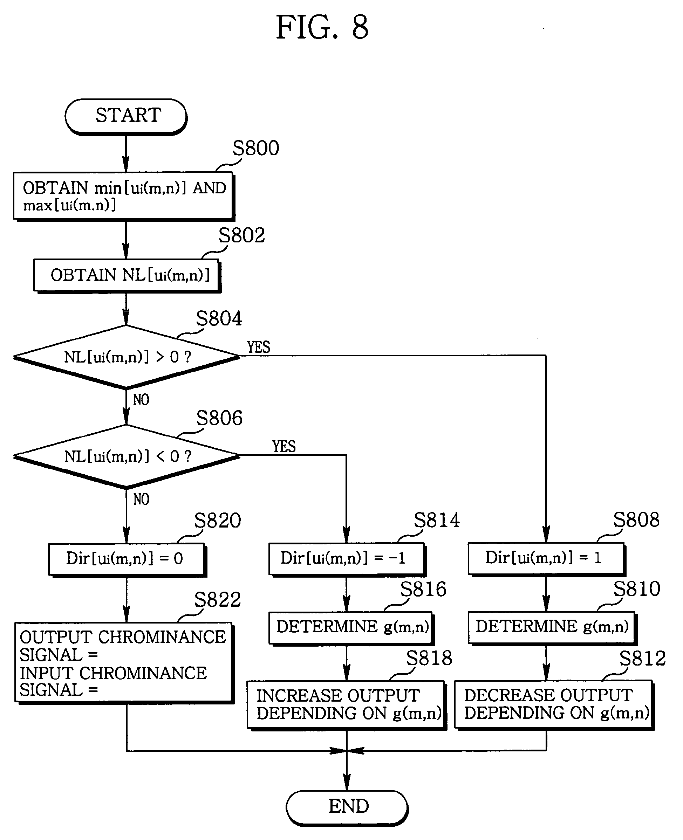

FIG. 8 is a flowchart illustrating a method for improving the color transition according to the present invention. As shown in the figure, the minimum/maximum detection unit (202) of the nonlinear Laplacian operation unit (200) determines the values of chrominance signals located within a region of an $N \times N$ mask centered at the input chrominance signal (Ui(m, n)) and then extracts the minimum (min[Ui(m, n)]) and the maximum (max[Ui(m, n)]) (step S800).

Then, the correction signal calculation unit (204) calculates a correction signal (NL[Ui(m, n)]) using the extracted minimum (min[Ui(m, n)]) and maximum (max[Ui(m, n)]), and the input chrominance signal (Ui(m, n)) (step S820).

Thereafter, the transition increase direction-detecting unit (210) determines whether the value of the calculated correction signal (NL[Ui(m, n)]) is NL[Ui(m, n)] > 0 or NL[Ui(m, n)] < 0 (steps S804 and S806).

If it is determined in step S804 that NL[Ui(m, n)] > 0, the transition increase direction-detecting unit (210) outputs the value of the transition increase direction signal (Dir[Ui(m, n)]) as 1 (step S808), and the transition magnitude-generating unit (220) determines the transition magnitude (g(m, n)) by causing the correction signal (NL[Ui(m, n)]) to be subjected to operation using the second rational expression, Equation 2, (step S810). Then, the transition control unit (230) calculates and then outputs an output chrominance signal that is Uo(m, n) = Ui(m, n) - g(m, n) $\times$ {Ui(m, n) - min[Ui(m, n)]} of which the level decreases depending on the transition magnitude (g(m, n)) (step 5812).

Further, if it is determined in step S804 that NL[Ui(m, n)] > 0 is not satisfied, but it is determined in step S806 that NL[Ui(m, n)] < 0 is satisfied, the transition increase direction-detecting unit (210) outputs the value of the transition increase direction signal (Dir[Ui(m, n)]) as -1 (step S814), and the transition magnitude-generating unit (220) determines the transition magnitude (g(m, n)) by causing the correction signal NL[Ui(m, n)] to be subjected to the operation using the second rational expression, Equation 2, (step S816). Then, the transition control unit (230) calculates and then outputs an output chrominance signal that is Uo(m, n) = Ui(m, n) +g(m, n) $\times$ {max[Ui(m, n)] - Ui(m, n)} of which the level increases depending on the transition magnitude (g(m, n)) (step S818).

Furthermore, if it is determined in step S804 that NL[Ui(m, n)] > 0 is not satisfied and it is determined in step S806 that NL[Ui(m, n)] < 0 is not satisfied, i.e., NL[Ui(m, n)] = 0, the transition increase direction-detecting unit (210) outputs the value of the transition increase direction signal (Dir[Ui(m, n)]) as 0 (step S820), and the transition control unit (230) outputs the output chrominance signal (Uo(m, n)) as the input chrominance signal (Ui(m; n)) (step S822).

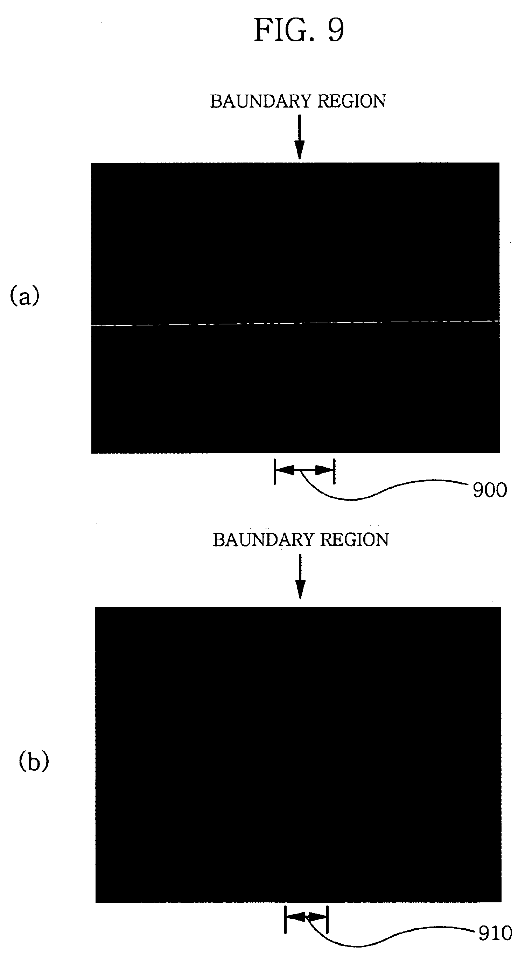

FIGS. 9 (a) and (b) are views showing a state where input chrominance signals (Ui(m, n)) are displayed directly on a screen, and a state where the input chrominance signals are processed and displayed on a screen by means of the apparatus and method for improving color transition according to the present invention. If the input chrominance signals (Ui(m, n)) are displayed directly on a screen as shown in FIG. 9 (a), the phenomenon of color smearing is produced across a region (900) that is wide in a left and right direction with respect to a boundary region.

However, if the input chrominance signals (Ui(m, n)) are processed and then displayed on a screen in accordance with the apparatus and method for improving the color transition according to the present invention, it can be found that the phenomenon of color smearing is produced only across a narrow region (910) in the left and right direction with respect to the boundary region as shown in FIG. 9 (b), thereby reducing the phenomenon of color smearing.

As apparent from the foregoing, the present invention has an advantage in that since second differential operation and low pass filtering are not used contrary to the conventional algorithm for improving a color transition, the present invention can be easily implemented using software and hardware costs can be reduced.

Further, the present invention has an advantage in that it is simply applied to the fields of display devices and software, thereby reducing the phenomenon of color smearing caused by delay of color signals.

Meanwhile, although the present invention has been described in detail in connection with the specific embodiments, it will be readily understood by those skilled in the art that various modifications and changes can be made thereto without departing from the technical spirit and scope of the present invention defined by the appended claims. For example, although the U signal in the YUV space has been described by way of example, it is also true for a V signal.

**Claims**

1. An apparatus for improving color transition using a nonlinear Laplacian, comprising:

   a nonlinear Laplacian operation unit for detecting a minimum (min[Ui(m, n)]) and a maximum (max[Ui(m, n)]) in chrominance signals located within a region of a mask having a predetermined size centered at an input chrominance signal (Ui(m, n)) and calculating a correction signal (NL[Ui(m, n)]);
   a transition increase direction-detecting unit for determining a transition increase direction signal (Dir[Ui(m, n)]) based on the correction signal (NL[Ui(m, n)]);
   a transition magnitude-generating unit for generating a transition magnitude signal (g(m, n)) based on the correction signal (NL[Ui(m, n)]); and
   a transition control unit for controlling the transition of the input chrominance signal (Ui(m, n)) based on the minimum (min[Ui(m, n)]), the maximum (max[Ui(m, n)]), the correction signal (NL[Ui(m, n)]), the transition increase direction signal (Dir[Ui(m, n)]) and the transition magnitude signal (g(m, n)), and generating an output chrominance signal (Uo(m, n)).

2. The apparatus as claimed in claim 1, wherein the input chrominance signal (Ui(m, n)) is a U signal that is difference between a luminance signal and a blue component, or a V signal that is difference between the luminance signal and a red component, among YUV signals.

3. The apparatus as claimed in claim 1, wherein the nonlinear Laplacian operation unit comprises:

   a minimum/maximum detection unit for detecting the minimum (min[Ui(m, n)]) and the maximum (max[Ui(m, n)]) in the chrominance signals located within a region of an N×N mask centered at the input chrominance signal (Ui(m, n)); and
   a correction signal calculation unit for calculating the correction signal (NL[Ui(m, n)]) by performing operation for the minimum (min[Ui(m, n)]) and the maximum (max[Ui(m, n)]) and the input chrominance signal (Ui(m, n)).

4. The apparatus as claimed in claim 3, wherein the correction signal calculation unit comprises:

   an adder for adding the minimum (min[Ui(m, n)]) and the maximum (max[Ui(m, n)]) to each other;
   a multiplier for multiplying the input chrominance signal (Ui(m, n)) by two; and
   a subtracter for subtracting an output signal of the multiplier from an output signal of the adder, and outputting the correction signal (NL[Ui(m, n)]).

5. The apparatus as claimed in claim 3, wherein the correction signal calculation unit performs nonlinear Laplacian operation in accordance with the following Equation 1:

$$NL[Ui(m,n)] = \max[Ui(m,n)] + \min[Ui(m,n)] - 2 \times Ui(m,n) \quad \cdots\cdots \ (1)$$

6. The apparatus as claimed in claim 1, wherein the transition increase direction-detecting unit outputs 1, -1 or 0 if the value of the correction signal (NL[Ui(m, n)]) is greater than 0, less than 0, or 0, respectively.

7. The apparatus as claimed in claim 1, wherein the level of the transition magnitude signal (g(m, n)) outputted from the transition magnitude-generating unit is set to a manual mode in which the transition magnitude signal is controlled by a user, or an automatic mode in which the transition magnitude signal is not controlled by the user.

8. The apparatus as claimed in claim 7, wherein the transition magnitude signal (g(m, n)) in the manual mode is calculated in accordance with the following Equation 2:

$$g(m,n) = \frac{a \times NL[Ui(m,n)]^2 + b \times |NL[Ui(m,n)]| + c}{a \times NL[Ui(m,n)]^2 + d \times |NL[Ui(m,n)]| + e} \times k \quad\quad \cdots\cdots \ (2)$$

wherein parameters a, b, c, d, e and k are experimental constants, and a = 0 or 1, b<d, c<e, and 0<k<1.

9. The apparatus as claimed in claim 7, wherein the transition magnitude signal (g(m, n)) in the automatic mode is calculated in accordance with the following Equation 2:

$$g(m,n) = \frac{a \times NL[Ui(m,n)]^2 + b \times |NL[Ui(m,n)]| + c}{a \times NL[Ui(m,n)]^2 + d \times |NL[Ui(m,n)]| + e} \times k \qquad \cdots\cdots (2)$$

wherein parameters a, b, c, d, e and k are experimental constants, and a = 0 or 1, b<d, c<e, and k = 1.

10. The apparatus as claimed in claim 1, wherein the output chrominance signal (Uo(m, n)) outputted from the transition control unit is determined as Ui(m, n) - g(m, n) × {Ui(m, n) - min[Ui(m, n)]} if the value of the transition increase direction signal (Dir[Ui(m, n)]) is 1, as Ui(m, n) +g(m, n) × {max[Ui(m, n)] - Ui(m, n)} if it is -1, or as the input chrominance signal (Ui(m, n)) if it is 0.

11. A method for improving color transition using a nonlinear Laplacian, comprising the steps of:

detecting a minimum (min[Ui(m, n)]) and a maximum (max[Ui(m, n)]) in chrominance signals located within a region of a mask having a predetermined size centered at an input chrominance signal (Ui(m, n));
generating a correction signal (NL[Ui(m, n)]) by causing the detected minimum (min[Ui(m, n)]) and maximum (max[Ui(m, n)]) to be subjected to nonlinear Laplacian operation;
generating a transition increase direction signal (Dir[Ui(m, n)]) and a transition magnitude signal (g(m, n)) depending on the magnitude of the correction signal (NL[Ui(m, n)]); and
controlling the transition of the input chrominance signal (Ui(m, n)) based on the minimum (min[Ui(m, n)]) and the maximum (max[Ui(m, n)]), the correction signal (NL[Ui(m, n)]), the transition increase direction signal (Dir [Ui(m, n)]) and the transition magnitude signal (g(m, n)), and generating an output chrominance signal (Uo(m, n)).

12. The method as claimed in claim 11, wherein the input chrominance signal (Ui(m, n)) is a U signal that is difference between a luminance signal and a blue component, or a V signal that is difference between the luminance signal and a red component, among YUV signals.

13. The method as claimed in claim 11, wherein the nonlinear Laplacian operation is performed in accordance with the following Equation 1:

$$NL[Ui(m,n)] = \max[Ui(m,n)] + \min[Ui(m,n)] - 2 \times Ui(m,n) \qquad \cdots\cdots (1)$$

14. The method as claimed in claim 11, wherein the transition increase direction signal is 1 if the value of the correction signal (NL[Ui(m, n)]) is greater than 0, -1 if it is less than 0, or 0 if it is 0.

15. The method as claimed in claim 11, wherein the level of the transition magnitude signal (g(m, n)) is set to a manual mode in which the transition magnitude signal is controlled by a user, or an automatic mode in which the transition magnitude signal is not controlled by the user.

16. The method as claimed in claim 15, wherein the transition magnitude signal (g(m, n)) in the manual mode is calculated in accordance with the following Equation 2:

$$g(m,n) = \frac{a \times NL[Ui(m,n)]^2 + b \times |NL[Ui(m,n)]| + c}{a \times NL[Ui(m,n)]^2 + d \times |NL[Ui(m,n)]| + e} \times k \qquad \cdots\cdots (2)$$

wherein parameters a, b, c, d, e and k are experimental constants, and a = 0 or 1, b<d, c<e, and 0<k<1.

17. The method as claimed in claim 15, wherein the transition magnitude signal (g(m, n)) in the automatic mode is calculated in accordance with the following Equation 2:

$$g(m,n) = \frac{a \times NL[Ui(m,n)]^2 + b \times |NL[Ui(m,n)]| + c}{a \times NL[Ui(m,n)]^2 + d \times |NL[Ui(m,n)]| + e} \times k \qquad \cdots\cdots \text{ (2)}$$

wherein parameters a, b, c, d, e and k are experimental constants, and a = 0 or 1, b<d, c<e, and k = 1.

18. The method as claimed in claim 11, wherein the output chrominance signal (LTo(m, n)) is determined as Ui(m, n) - g(m, n)×{Ui(m, n) - min[Ui(m, n)]} if the value of the transition increase direction signal (Dir[Ui(m, n)]) is 1, as Ui(m, n) +g(m, n) × {max[Ui(m, n)] - Ui(m, n)} if it is -1, or as the input chrominance signal (Ui(m, n)) if it is 0.

# FIG. 1

FIG. 2

# FIG. 3

min [u$_i$(m,n)]

max [u$_i$(m,n)]

u$_i$(m,n)

202

MINIMUM/
MAXIMUM
DETECTION
UNIT

204

300

302

304

+

−

×2

NL[u$_i$(m,n)]

# FIG. 4

START

NL[ui(m,n)] — S400

NL[ui(m,n)] > 0 — S402

YES

NO

NL[ui(m,n)] < 0 — S404

YES

NO

Dir[ui(m,n)] = 1 — S406

Dir[ui(m,n)] = 0 — S410

Dir[ui(m,n)] = -1 — S408

END

# FIG. 5

BOUNDARY REGION

ui(m,n)

| FIRST INTERVAL | SECOND INTERVAL | THIRD INTERVAL | FOURTH INTERVAL |

NL[ui(m,n)] = 0
Dir[ui(m,n)] = 0

NL[ui(m,n)] > 0
Dir[ui(m,n)] = 1

NL[ui(m,n)] < 0
Dir[ui(m,n)] = −1

NL[ui(m,n)] = 0
Dir[ui(m,n)] = 0

A

NL[ui(m,n)] = 0
Dir[ui(m,n)] = 0

# FIG. 6

```
                    ┌──────────────┐
                    │    START     │
                    └──────┬───────┘
                           │
                           ▼         S600
                    ╱◁──────────▷╲        NO
                   ╱ Dir[ui(m,n)] =1 ? ╲──────────────────┐
                   ╲                   ╱                   │
                    ╲◁──────────▷╱                         │
                           │ YES      S604                 ▼           S602
                           ▼                        ╱◁──────────▷╲         NO
         ┌───────────────────────┐                 ╱ Dir[ui(m,n)] =-1 ? ╲────────────────┐
         │ uo(m,n)] =             │                ╲                    ╱                │
         │ ui(m,n)] – g(m.n) x    │                 ╲◁──────────▷╱                        │
         │ {ui(m,n)- min[ui(m,n)]}│                        │ YES      S606                 │        S608
         └───────────┬───────────┘                        ▼                               ▼
                     │                          ┌──────────────────────┐       ┌────────────────────┐
                     │                          │ uo(m,n) =             │       │  uo(m,n) = ui(m.n) │
                     │                          │ ui(m,n) + g(m.n) x    │       └──────────┬─────────┘
                     │                          │ {max[ui (m,n)]-ui(m,n)}│                 │
                     │                          └───────────┬──────────┘                  │
                     │                                      │                              │
                     │◀─────────────────────────────────────┴──────────────────────────────┘
                     ▼
             ┌──────────────┐
             │     END      │
             └──────────────┘
```

# FIG. 7

FIRST INTERVAL | SECOND INTERVAL | THIRD INTERVAL | FOURTH INTERVAL

$Dir[u_i(m,n)] = 0$     $Dir[u_i(m,n)] = 1$     $Dir[u_i(m,n)] = -1$     $Dir[u_i(m,n)] = 0$

$Dir[u_i(m,n)] = 0$
POINT A

$----$ $u_i(m,n)$
——— $u_o(m,n)$

# FIG. 8

START

OBTAIN min[ui(m,n)] AND max[ui(m.n)]  S800

OBTAIN NL[ui(m,n)]  S802

NL[ui(m,n)] > 0 ?  S804 — YES

NO

NL[ui(m,n)] < 0 ?  S806 — YES

NO

Dir[ui(m,n)] = 0  S820

Dir[ui(m,n)] = -1  S814

Dir[ui(m,n)] = 1  S808

OUTPUT CHROMINANCE SIGNAL = INPUT CHROMINANCE SIGNAL =  S822

DETERMINE g(m,n)  S816

DETERMINE g(m,n)  S810

INCREASE OUTPUT DEPENDING ON g(m,n)  S818

DECREASE OUTPUT DEPENDING ON g(m,n)  S812

END

# FIG. 9

BAUNDARY REGION

(a)

900

BAUNDARY REGION

(b)

910

**European Patent Office**

**EUROPEAN SEARCH REPORT**

Application Number

EP 05 29 1693

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 668 606 A (OKAMOTO ET AL) 16 September 1997 (1997-09-16) * column 9, line 65 - column 11, line 26; figure 11 * | 1,2,11, 12 | G06T5/00 H04N5/14 H04N9/64 |
| D,Y | US 2003/107678 A1 (LIN PENG ET AL) 12 June 2003 (2003-06-12) * paragraph [0021] - paragraph [0026]; figure 1 * | 1-18 | |
| Y | VAN VLIET L J ET AL: "A NONLINEAR LAPLACE OPERATOR AS EDGE DETECTOR IN NOISY IMAGES" COMPUTER VISION GRAPHICS AND IMAGE PROCESSING, ACADEMIC PRESS, DULUTH, MA, US, vol. 45, no. 2, 1 February 1989 (1989-02-01), pages 167-195, XP000081335 * page 168, line 3 - line 17 * * page 171, paragraphs 2.2,THE,MAR-HILDRETH,OPERATOR * * page 173, paragraphs 2.3,NONLINEAR,LAPLACE,FILTER * | 1-18 | |
| A | VERBEEK P W ET AL: "LOW-LEVEL IMAGE PROCESSING BY MAX-MIN FILTERS" SIGNAL PROCESSING, ELSEVIER SCIENCE PUBLISHERS B.V. AMSTERDAM, NL, vol. 15, no. 3, 1 October 1988 (1988-10-01), pages 249-258, XP000045270 ISSN: 0165-1684 * paragraph [INTRODUCTION] * * paragraphs [RAMP], [EDGES] * | 1-18 | TECHNICAL FIELDS SEARCHED (Int.Cl.7) G06T H04N |
| A | US 2002/191859 A1 (AMANO RYUHEI ET AL) 19 December 2002 (2002-12-19) * the whole document * | 1-18 | |

The present search report has been drawn up for all claims

| Place of search | Date of completion of the search | Examiner |
|---|---|---|
| Munich | 27 October 2005 | Penchev, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

## ANNEX TO THE EUROPEAN SEARCH REPORT
## ON EUROPEAN PATENT APPLICATION NO.

EP 05 29 1693

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2005

| Patent document cited in search report | | | Publication date | Patent family member(s) | | Publication date |
|---|---|---|---|---|---|---|
| US 5668606 | A | | 16-09-1997 | NONE | | |
| US 2003107678 | A1 | | 12-06-2003 | CN<br>EP | 1520194 A<br>1439717 A2 | 11-08-2004<br>21-07-2004 |
| US 2002191859 | A1 | | 19-12-2002 | JP | 2002344746 A | 29-11-2002 |

EPO FORM P0459

For more details about this annex : see Official Journal of the European Patent Office, No. 12/82